# FASCICULE DE BREVET EUROPEEN

(11) **EP 1 683 388 B1**
(45) Date de publication et mention de la délivrance du brevet: **10.07.2013**
(21) Numéro de dépôt: 04818151.5
(22) Date de dépôt: 03.11.2004
(51) Int. Cl.: H04W 12/12

(54) **Methode de gestion de la sécurité d'applications avec un module de sécurité**
Verfahren zur Verwaltung der Sicherheit von Anwendungen in einem Sicherheitsmodul
Method for managing the security of applications with a security module

(30) Priorité: 04.11.2003 EP 03104069
(43) Date de publication de la demande: 26.07.2006
(73) Titulaire: Nagravision S.A., 1033 Cheseaux-sur-Lausanne (CH)
(72) Inventeur: KSONTINI, Rached, CH-1004 Lausanne (CH); CANTINI, Renato, CH-1782 Belfaux (CH)
(74) Mandataire: Wenger, Joel-Théophile
(86) Numéro de dépôt international: PCT/EP2004/052773
(87) Numéro de publication internationale: WO 2005/046278

(56) Documents cités:
- EP-A- 0 757 502
- US-A- 5 864 757

## Description

La présente invention concerne le domaine des réseaux mobiles appelés aussi réseaux cellulaires. Elle concerne plus particulièrement la gestion de la sécurité des applications mises en oeuvre avec un module de sécurité associé à un équipement mobile de téléphonie mobile.

Le module de sécurité d'un téléphone mobile ou portable est connu sous l'appellation "carte SIM" (Subscriber Identity Module) constituant l'élément central de la sécurité de ces téléphones. L'opérateur de téléphonie introduit, à la fabrication et/ou lors d'une phase de personnalisation, un numéro appelé IMSI (International Mobile Subscriber Identification) servant à identifier d'une manière sûre et unique chaque abonné désirant se connecter sur un réseau mobile. Chaque téléphone mobile, appelé équipement mobile ci-après, est identifié physiquement par un numéro stocké dans une mémoire non volatile de l'équipement mobile. Ce numéro, appelé IMEI, (International Mobile Equipment Identifier) contient une identification du type d'équipement mobile et un numéro de série servant à identifier de manière unique un équipement mobile donné sur un réseau du type GSM (Global System for Mobile communications), GPRS (General Packet Radio System) ou UMTS (Universal Mobile Telecommunications System). De plus, un équipement mobile est caractérisé par une version de logiciel SVN (Software Version Number) indiquant l'état de mise à jour du logiciel de base installé sur l'équipement mobile. La combinaison de l'identification du type et du numéro de série de l'équipement mobile avec la version de logiciel (SVN) donne une nouvelle identification, appelée IMEISV (International Mobile Equipment Identifier and Software Version Number). Le même concept d'identification s'applique également au WLAN (Wireless LAN) ou au câble TV bidirectionnel. L'identifiant physique peut être une adresse MAC (Media Access Control) qui correspond à l'adresse unique identifiant la configuration du matériel d'un utilisateur sur un réseau IP (Internet Protocol) et la version de logiciel peut être transmise par des protocoles de couche supérieure basés sur IP.

Les normes ETSI ("European Telecommunications Standards Institute"), définissent une station mobile (MS, mobile station) composée d'un équipement mobile (ME, mobile equipment) et d'un module d'abonné (SIM, subscriber identity module). Ce module d'abonné est en général amovible c'est-à-dire qu'il peut être soit retiré soit transféré d'un équipement mobile à un autre.

Lors de la mise en service d'un équipement mobile, plus particulièrement lors de sa connexion au réseau d'un opérateur, des informations comprenant les données d'identification sont échangées entre l'équipement mobile et le centre de gestion de l'opérateur qui autorise ou non son utilisation.

Le document EP0757502 décrit une méthode de verrouillage d'un module d'identification d'utilisateur lorsque l'identificateur physique de l'équipement mobile IMEI se trouve sur une liste noire. Lorsque l'équipement mobile se connecte au réseau mobile, il transmet l'identificateur IMEI à un centre de gestion. Ce dernier vérifie par comparaison l'identificateur reçu avec le contenu d'une base de donnée où l'opérateur enregistre les identificateurs d'équipements mobiles volés ou défectueux. Si un identificateur reçu est présent dans cette base de données, le centre de gestion transmet un message contenant une commande de blocage à l'équipement mobile concerné. Cette commande, après vérification de son authenticité, est transmise au module d'identification qui exécute une procédure de verrouillage empêchant toute connexion ultérieure de l'équipement mobile au réseau.

Le document US5864757 décrit une méthode d'activation d'un combiné mobile avec un module d'abonné basée sur l'utilisation d'une clé propre au combiné produisant un code correspondant à un identifiant du module d'abonné. Le combiné inclut une clé unique inviolable. Lors de son activation, le centre de gestion de l'opérateur transmet un message au combiné servant à calculer une clé spécifique à l'opérateur en utilisant la clé unique du combiné. Cette nouvelle clé est utilisée en combinaison avec un identificateur du réseau ou du module d'abonné pour générer un mot de contrôle qui est confronté avec un code stocké dans le module d'abonné. Si le mot de contrôle concorde avec le code du module d'abonné, le combiné est activé.

Les méthodes décrites dans ces deux documents traitent exclusivement d'aspect nécessitant une identification physique de l'équipement mobile basée par exemple sur l'identificateur IMEI. Lorsque ces méthodes sont mises en oeuvre, leurs effets se concentrent uniquement sur le blocage / déblocage du module d'abonné et/ou de l'équipement mobile de manière à empêcher toute connexion de l'équipement mobile au réseau.

Actuellement un équipement mobile offre à l'utilisateur, en plus de sa fonction usuelle d'établissement de conversations téléphoniques par le biais d'un accès à un réseau mobile, l'utilisation de nombreux autres services supplémentaires à valeur ajoutée tels que la consultation de diverses informations, les opérations bancaires à distance, le commerce électronique, l'accès à du contenu multimédia, etc. Ces services évolués nécessitent un niveau de sécurité de plus en plus élevé afin de prémunir les utilisateurs contre les fraudes éventuelles causées par des tiers cherchant à exploiter des failles de sécurité qui peuvent apparaître sur les équipements mobiles.

Une vérification devient donc nécessaire au moins à deux niveaux: d'une part au niveau de l'équipement mobile lui-même et d'autre part à celui des applications logicielles permettant le fonctionnement des différents services proposés par l'opérateur ou par des parties tierces. Il s'agit de garantir que le module d'abonné fonctionne seulement avec un équipement mobile de type et de version de logiciel dûment autorisé ou homologué par l'opérateur et/ou par les fournisseurs d'applications. Par fonctionnement du module d'abonné, on entend sa capacité de permettre l'utilisation de services sollicités par un utilisateur en exécutant un certain nombre d'applications logicielles préalablement installées dans une mémoire de l'équipement mobile et qui se servent du module d'abonné comme moyen de protection.

Ces applications exécutées dans l'équipement mobile utilisent des ressources disponibles dans le module d'abonné. Par ressources, on entend diverses fonctions et données nécessaires au bon fonctionnement d'une application. Certaines de ces ressources peuvent être communes à plusieurs applications, notamment les fonctions liées à la sécurité. Le module d'abonné peut ainsi bloquer ou altérer le fonctionnement de certaines applications pour lesquelles les conditions de sécurité établies par l'opérateur et/ou les fournisseurs d'applications ne sont pas respectées dans l'équipement mobile en question ou les droits de l'utilisateur de l'équipement mobile sont insuffisants.

Les documents cités ci-dessus ne couvrent pas les aspects logiques relatifs à un ensemble d'équipements mobiles comme par exemple des informations relatives à des applications logicielles installées, un numéro de version de logiciel ou encore une référence de type ou de modèle de l'équipement mobile, etc. Il s'agit donc de disposer d'une méthode de gestion ciblée des ressources du module d'abonné afin d'activer / désactiver d'une manière sélective des applications ou des fonctions d'applications utilisant ces ressources. Il n'est toutefois pas souhaitable que ces opérations empêchent l'équipement mobile d'accéder au réseau en bloquant totalement le module d'abonné.

Le but de la présente invention est de proposer une méthode de gestion de la sécurité de l'ensemble équipement mobile, module d'abonné, applications afin de limiter les risques liés au fait qu'un module d'abonné soit utilisé à mauvais escient par des applications exécutées sur un équipement mobile de type et/ou de version de logiciel ne remplissant pas certains critères de sécurité préétablis.

Un autre but est de protéger l'utilisateur de l'équipement mobile ainsi que les fournisseurs d'applications concernés contre les abus résultants d'un clonage de l'équipement mobile et/ou du module d'abonné.

Ces buts sont atteints par une méthode de gestion de la sécurité d'applications **selon la revendication 1.**

Les ressources du module d'abonné sont bloquées de manière ciblée, ceci dans le but de bloquer ou réduire la fonction de certaines applications. On ne bloque pas directement des applications de l'équipement: on agit de manière indirecte sur les applications, c'est-à-dire que l'effet de blocage va se manifester uniquement lorsque l'équipement essaiera d'exécuter ces applications.

Cette méthode s'applique de préférence au réseau mobile. Par conséquent, l'équipement est un équipement mobile, comme par exemple un équipement de téléphonie mobile ou téléphone portable. Le module de sécurité est un module d'abonné inséré dans le téléphone portable du type carte SIM (subscriber identity module). Cet ensemble se connecte à un réseau mobile du type GSM (Global System for Mobile communications), GPRS (General Packet Radio System), UMTS (Universal Mobile Telecommunications System) ou autre, géré par un serveur de contrôle d'un opérateur. Des applications logicielles sont installées dans l'équipement mobile et configurées de manière à utiliser des ressources (données ou fonctions) présentes dans le module d'abonné. Elles ne peuvent donc être utilisées dans leur intégrité seulement si les conditions de sécurités sont satisfaites selon des critères préétablis par l'opérateur et/ou le fournisseur d'applications. Cette vérification des critères est à la charge du serveur de contrôle. L'application, suite aux instructions envoyées par le serveur de contrôle, est finalement à la charge du module de sécurité qui peut laisser libre ou bloquer l'accès à des ressources nécessaires au bon fonctionnement d'une application installée dans l'équipement mobile.

Les données de ces ressources peuvent comprendre des informations tels que numéro de comptes, des programmes (sous, forme de code pouvant être installé dans l'équipement mobile), des clés d'encryption/décryption, des droits d'accès à du contenu, etc.

Les fonctions de ces ressources peuvent comprendre des algorithmes cryptographiques, des processus de vérification, des processus de génération de signatures digitales, des processus d'encryptage, des processus d'authentification, des processus de validation de données, des processus de contrôle d'accès, des processus de sauvegarde de données, des processus de paiement etc.

Le serveur de contrôle joue un rôle essentiel en gérant les éléments de confiance ou de sécurité liés à l'ensemble équipement mobile / module abonné. Il interprète les données qui lui sont transmises par l'équipement mobile afin de contrôler ou limiter l'utilisation d'applications, fonctions ou ressources disponibles au moyen du module d'abonné.

Le serveur recevant les informations d'identité d'un équipement mobile et de son module d'abonné et comprenant l'IMEISV et l'IMSI décide, selon certains critères, si une nouvelle instruction doit être envoyée au module d'abonné pour redéfinir un nouveau profil de protection définissant les ressources du module d'abonné pouvant être utilisées par les applications exécutées dans l'équipement mobile. Les critères peuvent se référer, par exemple, à la mise à jour de la version de logiciel installée sur l'équipement mobile, au téléchargement de nouvelles applications sur l'équipement mobile, à la période de mise à jour du profil de protection, au nombre de connexions au réseau, à la technologie utilisée pour l'accès au réseau, à l'identité du réseau d'accès utilisé. Ils sont également liés à différents risques associés au matériel ou aux logiciels utilisés que l'opérateur et/ou le fournisseur d'applications et/ou l'utilisateur de l'équipement mobile désirent prendre en compte.

La méthode selon l'invention s'exécute généralement lors de chaque connexion de l'équipement mobile au réseau ou après chaque mise à jour de la version de logiciel de l'équipement mobile ou de celle du module d'abonné ou encore de celle de ressources sur le module d'abonné. Elle peut également être exécutée lors de chaque activation ou désactivation d'une application sur l'équipement mobile.

Selon une variante, elle peut être exécutée périodiquement à un rythme donné par le serveur de contrôle ou après chaque démarrage d'une application sur l'équipement mobile. Selon une autre variante, le module d'abonné ne va pas recevoir un nouveau message du centre de contrôle tant que l'identifiant IMEISV de l'équipement mobile demeure inchangé.

Lors de la ré-initialisation du module d'abonné, il est préférable de bloquer un certain nombre de ressources jusqu'à l'arrivée du cryptogramme. Ainsi, si l'équipement mobile veut intercepter le cryptogramme et ne pas le transmettre au module abonné, tout ou partie des ressources (données ou fonctions) du module d'abonné ne seront pas disponibles pour les applications exécutées dans l'équipement mobile. Selon le type de réalisation, il est possible que certaines ressources du module d'abonné utilisées par des applications d'un bas niveau de sécurité, soient mises en fonction par défaut avant l'arrivée du cryptogramme. Ceci est également le cas pour des ressources nécessaires à l'obtention de l'accès au réseau, sans quoi l'envoi du cryptogramme ne serait pas possible par ce même réseau.

Lorsque le module d'abonné vérifie la validité du cryptogramme, il identifie aussi de manière indirecte l'équipement mobile et s'assure que les données viennent effectivement du serveur de contrôle. Autrement dit, par ce cryptogramme, le serveur de contrôle donne implicitement l'assurance au module d'abonné que le type et la version de logiciel de l'équipement mobile ont été pris en compte avant de transmettre des instructions au module abonné. Ces dernières sont, de ce fait, chargées, le cas échéant, de donner ou refuser l'autorisation d'utilisation complète ou partielle de certaines applications de l'équipement mobile.

L'équipement mobile joue un rôle de relais dans cette étape de vérification en établissant un dialogue quasi direct entre le module d'abonné et le serveur de contrôle. Ainsi la sécurité des messages échangés est assurée de bout en bout entre le serveur de contrôle et le module d'abonné via l'environnement d'exécution des applications mises en oeuvre sur l'équipement mobile. Celui-ci ne peut donc pas "tricher" ou transformer les données vis-à-vis du module d'abonné.

La présente invention concerne également un module de sécurité **décrit par la revendication 19.**

Ce module de sécurité est utilisé par exemple comme module d'abonné ou carte SIM connecté à un équipement mobile.

L'invention sera mieux comprise grâce à la description détaillée qui va suivre et qui se réfère aux figures annexées données à titre d'exemple nullement limitatif, à savoir:
- La figure 1 illustre un schéma bloc montrant les différentes parties de l'équipement mobile et du serveur mises à contribution lors de l'échange des données d'identification et du cryptogramme.
- La figure 2 représente un schéma bloc de l'ensemble équipement mobile /module abonné avec les interactions entre les différentes parties lors du fonctionnement d'une application.

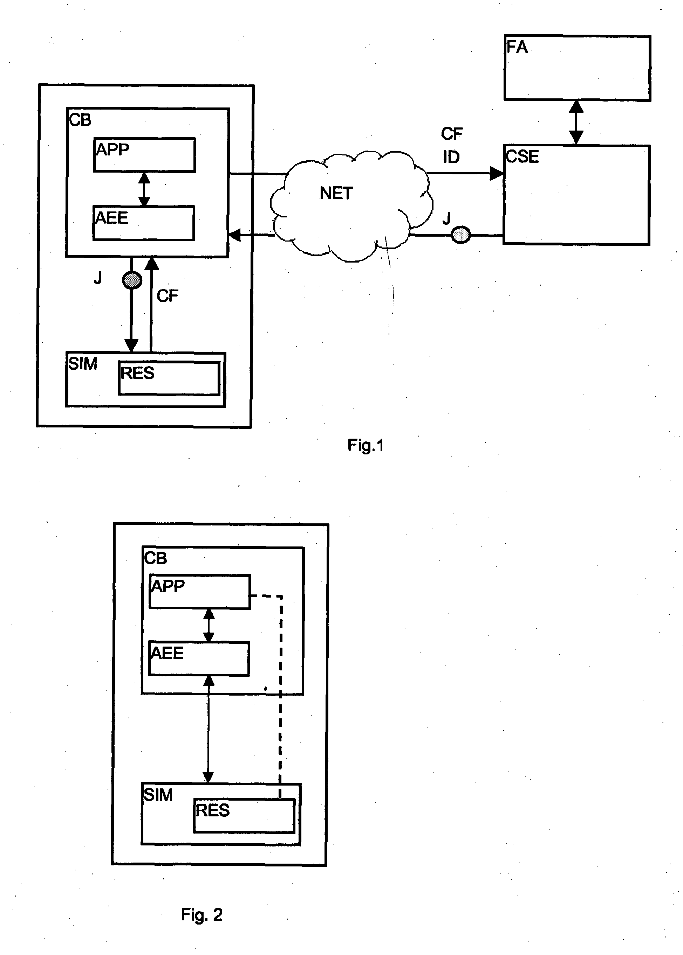

La figure 1 montre l'ensemble équipement mobile (CB) et module d'abonné (SIM) qui transmet via un réseau mobile (NET) des données d'identification (ID) que le serveur de contrôle (CSE) vérifie. Ce dernier renvoie un cryptogramme (J) vers le module d'abonné via l'équipement mobile (CB). L'équipement mobile (CB) inclut une ou plusieurs applications logicielles (APP) fonctionnant dans un environnement d'exécution (AEE). Ces applications proviennent soit d'un fournisseur d'applications (FA) associé au serveur de contrôle (CSE) de l'opérateur, soit, elles sont programmées d'origine par le fabricant de l'équipement mobile.

Le module d'abonné inclut des ressources (RES) utilisées par les applications logicielles (APP).

La figure 2 montre que le fonctionnement des applications (APP) de l'équipement mobile (CB) dépend directement des ressources (RES) disponibles dans le module d'abonné. En l'absence de ressources adéquates, l'application peut, soit ne pas démarrer, soit fonctionner de façon très limitée avec des paramètres par défaut pouvant générer des messages d'erreur invitant l'utilisateur à accomplir des actions correctives nécessaires comme par exemple changer d'équipement mobile (CB) ou de module d'abonné (SIM).

L'équipement mobile (CB) s'identifie, par exemple lors de chaque requête de connexion au réseau, au serveur de contrôle (CSE) via le réseau mobile (NET) en transmettant de préférence des informations spécifiques à un équipement mobile: IMEISV (International Mobile Equipment Identity and Software Version Number) et un code propre à un module d'abonné: IMSI (International Mobile Subscriber Identity). Le premier numéro IMEISV est une suite de 16 chiffres contenant notamment un code d'homologation du fabricant de l'équipement mobile un numéro de série identifiant physiquement l'équipement mobile de manière unique et la version de logiciel installée sur l'équipement mobile en question. Le second numéro IMSI est une suite de 15 chiffres et comprend un code attribué par l'opérateur auprès duquel un utilisateur a souscrit un abonnement permettant d'identifier un abonné de manière unique. Pour des équipements mobiles réalisés selon des normes antérieures établies par ETSI (European Telecommunications Standards Institute), la combinaison du numéro IMEI composé d'une suite de 15 chiffres et du numéro SVN composé d'une suite de 2 chiffres fournit également les informations nécessaires à la réalisation de la méthode.

Lors de l'identification d'un équipement mobile, le serveur de contrôle (CSE) analyse et vérifie les données (ID) transmises en les confrontant avec le contenu d'une liste noire (données à rejeter) ou d'une liste blanche (données acceptées).

Une base de données permet d'affiner, si nécessaire, l'identification d'un abonné et de déterminer ses particularités telles que services autorisés, paiements de l'abonnement et/ou des services effectués ou non, période d'abonnement, profil de sécurité associé à l'équipement mobile utilisé, applications installées sur l'équipement mobile, ressources disponibles sur le module de sécurité, préférences de l'utilisateur de l'équipement mobile, etc. Les résultats de cette vérification sont ensuite utilisés dans le but de déterminer un cryptogramme, appelé jeton (J), que le serveur de contrôle (CSE) transmet à l'équipement mobile (CB). Il est à noter que le serveur de contrôle (CSE) peut être distinct de l'opérateur mobile et la requête provenant d'un équipement mobile sera acheminée vers cette autorité de contrôle.

L'environnement d'exécution d'applications (AEE) de l'équipement mobile (CB) transmet le jeton (J) tel quel, sans l'altérer, au module d'abonné, l'équipement mobile (CB) jouant un rôle de relais uniquement.

Si le jeton (J) est valable, le module d'abonné peut libérer, respectivement bloquer certaines ressources (RES). La ou les applications (APP) peuvent ainsi s'exécuter selon les critères imposés par le serveur de contrôle (CSE). En effet, le jeton (J) inclut ou est accompagné d'instructions particulières à destination du module d'abonné qui peuvent conditionner le fonctionnement de l'une ou l'autre des applications (APP) de l'équipement mobile (CB). Par exemple l'exécution de transactions financières peut être limitée lorsque l'abonné se trouve être connecté à un autre réseau que celui auprès duquel il est abonné, par exemple dans un pays différent de celui de son domicile (roaming) en raison de certains critères de sécurité ou de préférences de l'abonné ou de préférences du fournisseur du service financier ou de contraintes légales en vigueur dans le pays en question. Dans un autre cas, lorsqu'un module d'abonné est inséré dans un équipement mobile (CB) non reconnu ou non homologué par l'opérateur, le jeton (J) retourné par le serveur de contrôle (CSE) peut bloquer des ressources (RES) du module d'abonné et, de ce fait empêcher ou altérer, l'exécution de ou des applications (APP).

Dans le cas d'un possible clonage de l'équipement mobile (CB) et/ou du module d'abonné (SIM), les résultats de la vérification avec la base de données comporteront des instructions dépendant des risques que l'opérateur accepte de prendre avec des téléphones mobiles clonés. Par exemple, le jeton (J) généré en conséquence peut soit bloquer toutes les ressources (RES) du module d'abonné, soit limiter leur utilisation dans le temps et/ou créer un message d'avertissement à l'abonné via l'environnement d'exécution des applications (AEE).

Le jeton (J) peut être par exemple associé à une signature générée à l'aide d'une clé privée RSA, (Rivest, Shamir, Adelman) K_{RSA_Pri} à partir d'un ensemble de données contenant, par exemple, l'IMSI, l'IMEISV, les références des ressources du module d'abonné, un compteur. Cette clé ne serait connue que du serveur de contrôle, alors que sa partie publique K_{RSA_Pub} serait connue du module d'abonné. L'avantage de l'utilisation de clés asymétriques réside en ce que la clé servant à créer des signatures ne se trouve pas à l'extérieur du serveur de contrôle (CSE).

Bien entendu, d'autres algorithmes à clés asymétriques tels que par exemple DSA (Digital Signature Algorithm), et ECC (Elliptic Curve Cryptography) peuvent constituer des alternatives à RSA.

L'usage d'algorithme à clés symétriques peut être préféré pour des raisons de simplicité, de rapidité des vérifications ou de coûts de fabrication et de mise en oeuvre plus faibles. Dans ce cas, la clé serait connue du serveur (CSE) et du module d'abonné, par exemple un algorithme IDEA (International Data Encryption Algorithm) pourrait être utilisé pour signer l'ensemble (IMSI, IMEISV, références des ressources da le module d'abonné, compteur). Comme alternative à l'algorithme IDEA, des algorithmes tels que, par exemple, TDES (Triple Data Encryption Standard) et AES (Advanced Encryption Standard) peuvent aussi être utilisés.

Dans ces deux variantes à clés asymétriques et symétriques, le module d'abonné vérifie la concordance des différents champs apparaissant dans le jeton (J), notamment elle contrôle le compteur (CPT) en le comparant avec un compteur correspondant mémorisé dans la carte qui est régulièrement maintenu à jour. Ce compteur permet d'éviter le double usage d'un même jeton (J) adressé au module d'abonné afin d'empêcher une attaque par répétition (replay attack).

Une variante au compteur est d'utiliser un aléa (nombre aléatoire) généré par le module d'abonné. Cet aléa est transmis avec les données envoyées au serveur de contrôle. Ce dernier renvoie cet aléa dans le cryptogramme de réponse et le module d'abonné peut vérifier qu'il s'agit bien d'un nouveau message. Plus généralement, afin d'éviter tout risque d'usage d'un ancien cryptogramme, ce dernier comprend une variable prédictible par le module d'abonné, soit un compteur ou un aléa.

Le module d'abonné considère aussi les références des ressources (RES) dont il autorise ou non l'utilisation par les applications exécutées dans l'équipement mobile (CB).

Le module d'abonné ne connaît pas en tant que telle les références d'applications (APP) installées dans l'équipement mobile (CB). En effet, certaines applications plus globales possèdent une interface relativement ouverte qui leur permet d'être utilisées par n'importe quelles applications secondaires externes. Par exemple, sur une application générale de paiement peuvent se greffer des applications particulières en fonction du mode de paiement utilisé. Le module d'abonné ne peut se baser que sur les références de ses propres ressources (RES) (données ou fonctions). En acceptant les risques liés à un équipement mobile, l'opérateur fait un choix en sachant quelles ressources (RES) du module d'abonné sont utilisées par quelle(s) application(s) (APP) exécutées dans l'équipement mobile (CB).

Dans une autre variante la signature faite à l'aide d'une clé du type RSA ou IDEA peut être remplacée par un bloc généré avec une clé partagée HMAC (Keyed-Hashing for Message Authentication) à partir de l'ensemble (IMSI, IMEISV, références de ressources du module d'abonné, compteur). HMAC est un mécanisme pour l'authentification de messages par l'utilisation de fonctions de hachage cryptographiques telles que MD5 (Message Digest) ou SHA-1 (Secure Hash Algorithm), en combinaison avec une clé partagée c'est-à-dire que la même clé se trouve dans le serveur de contrôle (CSE) et dans le module d'abonné.

Cette clé présente à la fois dans le serveur de contrôle (CSE) et dans le module d'abonné peut être chargée lors de la personnalisation du module d'abonné ou lors de l'installation de certaines ressources dans le module d'abonné. Selon les options, à chaque ressource ou groupe de ressources du module d'abonné peut être associée une clé différente, ou la clé peut être globale pour l'ensemble des ressources et unique pour un module d'abonné donné.

Pour plus de sécurité, lorsque le module d'abonné a reçu un jeton (J), il peut retransmettre au serveur de contrôle (CSE), via l'équipement mobile (CB) et le réseau mobile (NET), un message de confirmation (CF) attestant la bonne réception et le traitement adéquat du jeton (J) par le module d'abonné. La confirmation (CF) comprend au moins un code de succès ou d'erreur de l'opération ainsi qu'un compteur, similaire à celui du jeton (J), servant à la protection contre les attaques par répétition. Ce message permet aussi au serveur de contrôle (CSE) de tenir à jour le compteur associé au module d'abonné.

Dans une variante de l'invention, l'équipement mobile peut être remplacé par un équipement non mobile tel qu'un décodeur de télévision à péage ou un ordinateur. Le serveur de contrôle reçoit de la part d'un module de sécurité, l'équivalent du module d'abonné, l'identifiant de l'équipement connecté au réseau et l'identifiant du module de sécurité. En réponse, le serveur effectue les vérifications telles que décrites plus haut et renvoie un cryptogramme au module de sécurité. Cette réponse va libérer ou bloquer des ressources dans le module de sécurité.

## Revendications

1. Méthode de gestion de la sécurité d'applications (APP) fonctionnant dans un équipement (CB) connecté à un réseau (NET), ledit réseau (NET) étant administré par un serveur de contrôle (CSE) d'un opérateur, lesdites applications (APP) utilisant des ressources (RES), données ou fonctions, stockées dans un module de sécurité (SIM) relié localement audit équipement (CB), comprenant les étapes préliminaires suivantes:
• réception de données comprenant au moins le type et la version de logiciel de l'équipement (CB) et l'identité du module de sécurité (SIM), via le réseau (NET), par le serveur de contrôle (CSE),
• analyse et vérification par le serveur de contrôle (CSE) des dites données (ID),
• génération d'un cryptogramme (J) à partir du résultat de la vérification sur lesdites données (ID), et transmission dudit cryptogramme (J), via le réseau (NET) et l'équipement (CB), au module de sécurité (SIM),
• réception et analyse du cryptogramme (J) par le module de sécurité (SIM), le cryptogramme (J) comprenant des instructions conditionnant le fonctionnement d'applications (APP) selon des critères établis par le fournisseur de ladite application (APP) et/ou l'opérateur et/ou l'utilisateur de l'équipement (CB),
ladite méthode est **caractérisée en ce que** le module de sécurité (SIM) active, respectivement désactive de manière sélective au moins une ressource (RES), données ou fonctions, dudit module de sécurité (SIM) en utilisant les instructions comprises dans le cryptogramme (J), les ressources (RES), données ou fonctions, nécessaires à l'obtention d'un accès au réseau (NET) de l'équipement mobile (CB) étant mises en fonction avant l'arrivée du cryptogramme (J).

2. Méthode selon la revendication 1, **caractérisée en ce que** l'équipement (CB) est un équipement (CB) mobile de téléphonie mobile.

3. Méthode selon la revendication 1, **caractérisée en ce que** le réseau (NET) est un réseau mobile du type GSM, GPRS ou UMTS.

4. Méthode selon l'une des revendications 1 à 3, **caractérisée en ce que** le module de sécurité (SIM) est un module d'abonné (SIM) inséré dans l'équipement (CB) mobile de téléphonie mobile de type carte SIM.

5. Méthode selon l'une des revendications 1 à 4, **caractérisée en ce que** l'identification de l'ensemble équipement mobile / module d'abonné (SIM) est effectuée à partir de l'identifiant (IMEISV) de l'équipement mobile (CB) et du numéro d'identification du module d'abonné (IMSI) propre à un abonné au réseau (NET) mobile.

6. Méthode selon l'une des revendications 1 à 5, **caractérisée en ce que** les critères définissent des limites d'utilisation d'une application (APP) selon des risques associés ladite application (APP) et au type et la version de logiciel de l'équipement (CB) mobile que l'opérateur et/ou le fournisseur d'applications (APP) et/ou l'utilisateur de l'équipement (CB) mobile désirent prendre en compte.

7. Méthode selon l'une des revendications 1 à 6, **caractérisée en ce qu'**elle s'exécute après chaque connexion de l'équipement mobile (CB) au réseau (NET).

8. Méthode selon l'une des revendications 1 à 6, **caractérisée en ce qu'**elle s'exécute après chaque mise à jour de la version de logiciel de l'équipement (CB) mobile.

9. Méthode selon l'une des revendications 1 à 6, **caractérisée en ce qu'**elle s'exécute après chaque activation ou désactivation d'une application (APP) sur l'équipement (CB) mobile.

10. Méthode selon l'une des revendications 1 à 6, **caractérisée en ce qu'**elle s'exécute après chaque mise à jour de la version de logiciel du module d'abonné (SIM).

11. Méthode selon l'une des revendications 1 à 6, **caractérisée en ce qu'**elle s'exécute après chaque mise à jour de ressources (RES) sur le module d'abonné (SIM).

12. Méthode selon l'une des revendications 1 à 6, **caractérisée en ce qu'**elle s'exécute périodiquement à un rythme donné par le serveur de contrôle (CSE).

13. Méthode selon l'une des revendications 1 à 6, **caractérisée en ce qu'**elle s'exécute après chaque démarrage d'une application (APP) sur l'équipement mobile (CB).

14. Méthode selon l'une des revendications précédentes, **caractérisée en ce que** le module d'abonné (SIM), préalablement à l'exécution des instructions données par le cryptogramme (J), compare l'identifiant (IMEISV) de l'équipement mobile (CB) avec celui précédemment reçu et initie l'opération de vérification seulement si l'identifiant (IMEISV) a changé.

15. Méthode selon l'une des revendications 1 à 5, **caractérisée en ce que** le serveur de contrôle (CSE), préalablement à la transmission du cryptogramme (J), compare l'identifiant (IMEISV) de l'équipement mobile (CB) avec celui précédemment reçu et initie l'opération de vérification seulement si l'identifiant (IMEISV) a changé.

16. Méthode selon l'une des revendications 1 à 15, **caractérisée en ce que** le cryptogramme (J) est constitué par un message encrypté par le serveur de contrôle (CSE) à l'aide d'une clé d'encryption asymétrique ou symétrique à partir d'un ensemble de données contenant, entre autres données, l'identifiant (IMEISV) de l'équipement mobile (CB), le numéro d'identification (IMSI) du module d'abonné (SIM), des références de ressources (RES) du module d'abonné (SIM) et une variable prédictible (CPT).

17. Méthode selon l'une des revendications 1 à 16 **caractérisée en ce que** le module d'abonné (SIM) transmet au serveur de contrôle (CSE), via l'équipement mobile (CB) et le réseau mobile (NET), un message de confirmation (CF) lorsque le module abonné (SIM) a reçu le cryptogramme (J), ledit message attestant la bonne réception et le traitement adéquat du cryptogramme (J) par le module d'abonné (SIM).

18. Méthode selon la revendication 1, **caractérisée en ce que** l'équipement (CB) est un décodeur de télévision à péage ou un ordinateur auquel est connecté le module de sécurité (SIM).

19. Module de sécurité (SIM) comprenant des ressources (RES) destinées à être localement accédées par au moins une application (APP) installée dans un équipement (CB) relié à un réseau (NET), ledit équipement (CB) comprenant des moyens de lecture et de transmission de données comprenant au moins l'identifiant (IMEISV) de l'équipement (CB) et l'identifiant (IMSI) du module de sécurité (SIM), ledit module de sécurité (SIM) comprenant des moyens de réception et d'analyse d'un cryptogramme (J) comprenant des instructions conditionnant le fonctionnement de l'application (APP) selon des critères préétablis par le fournisseur de ladite application (APP) et/ou l'opérateur et/ou l'utilisateur de l'équipement (CB), le module de sécurité (SIM) est **caractérisé en ce qu'**il comprend des moyens d'activation, respectivement de désactivation sélective d'au moins une ressource (RES), données ou fonctions, dudit module de sécurité (SIM), lesdits moyens d'activation, respectivement de désactivation sélective utilisant les instructions comprises dans le cryptogramme (J), les ressources, données ou fonctions, nécessaires à l'obtention d'un accès au réseau (NET) de l'équipement mobile (CB) étant mises en fonction avant l'arrivée du cryptogramme (J).

20. Module de sécurité (SIM) selon la revendication 19, **caractérisé en ce qu'**il constitue un module d'abonné (SIM) du type "carte SIM" connecté à un équipement (CB) mobile.

## Patentansprüche

1. Verfahren zum Sicherheitsmanagement von Anwendungen (APP), die in einem Endgerät (CB) funktionieren, das mit einem Netz (NET) verbunden ist, das von einem Kontrollserver (CSE) eines Betreibers verwaltet wird, wobei die Anwendungen Ressourcen (RES), Daten oder Funktionen, benutzen, die in einem Sicherheitsmodul (SIM) gespeichert sind, das mit dem genannten Endgerät (CB) örtlich verbunden ist, mit folgenden Vorstufen:
- Empfang von Daten, die mindestens den Typ und die Softwareversion des Endgeräts (CB) und die Identität des Sicherheitsmoduls (SIM) enthalten, über das Netz (NET), durch den Kontrollserver (CSE),
- Analyse und Nachprüfung durch den Kontrollserver (CSE) der besagten Daten (ID),
- Erzeugung eines Kryptogramms (J) ausgehend von dem Ergebnis der Nachprüfung der Daten (ID), und Übertragung des genannten Kryptogramms (J) über das Netz (NET) und das Endgerät (CB) an das Sicherheitsmodul (SIM),
- Empfang und Analyse des Kryptogramms (J) der Anweisungen zum Betrieb von Anwendungen (APP) nach Kriterien, die vom Anbieter der Anwendung (APP) und/oder vom Betreiber des Endgeräts (CB) festgelegt wurden;
besagtes Verfahren ist **dadurch gekennzeichnet, dass** das Sicherheitsmodul (SIM) mindestens eine Ressource (RES), Daten oder Funktionen des genannten Sicherheitsmoduls (SIM) selektiv aktiviert bzw. deaktiviert, unter Benutzung der Anweisungen in dem Kryptogramm (J), wobei die Ressourcen (RES), Daten oder Funktionen notwendig für den Zugang zu dem Netz (NET) des Mobilgeräts (CB) sind und vor der Ankunft des Kryptogramms (J) in Betrieb gesetzt werden.

2. Verfahren nach Anspruch 1, **gekennzeichnet dadurch, dass** das Endgerät (CB) ein Mobiltelefon ist.

3. Verfahren nach Anspruch 1, **gekennzeichnet dadurch dass** das Netz (NET) ein Mobilnetz von der Art GSM, GPRS oder UMTS ist.

4. Verfahren nach einem beliebigen der Ansprüche 1 bis 3, **gekennzeichnet dadurch, dass** das Sicherheitsmodul (SIM) ein in das Mobiltelefon eingesetztes Abonnentenmodul vom Typ SIM-Karte ist.

5. Verfahren nach einem beliebigen der Ansprüche 1 bis 4, **gekennzeichnet dadurch, dass** die Identifizierung der Einheit Mobilgerät / Abonnentenmodul (SIM) von der Kennung (IMEISV) des Mobilgeräts (CB) und der Identifikationsnummer des Abonnentenmoduls (IMSI) eines Abonnenten des Mobilnetzes aus erfolgt.

6. Verfahren nach einem beliebigen der Ansprüche 1 bis 5, **gekennzeichnet dadurch, dass** die Kriterien Nutzungsgrenzen einer Anwendung (APP) definieren, je nach den Risiken im Zusammenhang mit der Anwendung (APP) und dem Typ und der Softwareversion des Mobilgeräts (CB), das der Betreiber und/oder der Anbieter von Anwendungen (APP) und/oder der Benutzer des Mobilgeräts (CB) im Auge haben.

7. Verfahren nach einem beliebigen der Ansprüche 1 bis 6, **dadurch gekennzeichnet, dass** es nach jeder Verbindung des Mobilgeräts (CB) mit dem Netz (NET) durchgeführt wird.

8. Verfahren nach einem beliebigen der Ansprüche 1 bis 6, **dadurch gekennzeichnet, dass** es nach jeder Aktualisierung der Softwareversion des Mobilgeräts (CB) durchgeführt wird.

9. Verfahren nach einem beliebigen der Ansprüche 1 bis 6, **dadurch gekennzeichnet, dass** es nach jeder Aktivierung oder Deaktivierung einer Anwendung (APP) auf dem Mobilgerät (CB) durchgeführt wird.

10. Verfahren nach einem beliebigen der Ansprüche 1 bis 6, **dadurch gekennzeichnet, dass** es nach jeder Aktualisierung der Softwareversion des Abonnentenmoduls (SIM) durchgeführt wird.

11. Verfahren nach einem beliebigen der Ansprüche 1 bis 6, **dadurch gekennzeichnet, dass** es nach jeder Aktualisierung von Ressourcen (RES) auf dem Abonnentenmodul (SIM) durchgeführt wird.

12. Verfahren nach einem beliebigen der Ansprüche 1 bis 6, **dadurch gekennzeichnet, dass** es periodisch in einem vom Kontrollserver (CSE) vorgegebenen Rhythmus durchgeführt wird.

13. Verfahren nach einem beliebigen der Ansprüche 1 bis 6, **dadurch gekennzeichnet, dass** es nach jedem Start einer Anwendung (APP) auf dem Mobilgerät (CB) durchgeführt wird.

14. Verfahren nach einem der vorhergehenden Ansprüche, **gekennzeichnet dadurch, dass** das Abonnentenmodul (SIM), vor der Ausführung der Anweisungen des Kryptogramms (J) die Kennung (IMEISV) des Mobilgeräts (CB) mit der vorher empfangenen vergleicht und mit der Nachprüfung nur dann beginnt, wenn sich die Kennung (IMEISV) geändert hat.

15. Verfahren nach einem beliebigen der Ansprüche 1 bis 5, **gekennzeichnet dadurch dass** der Kontrollserver (CSE) vor der Übertragung des Kryptogramms (J) die Kennung (IMEISV) des Mobilgeräts (CB) mit der vorher empfangenen vergleicht und mit der Nachprüfung nur dann beginnt, wenn sich die Kennung (IMEISV) geändert hat.

16. Verfahren nach einem beliebigen der Ansprüche 1 bis 15, **gekennzeichnet dadurch, dass** das Kryptogramm (J) aus einer Nachricht besteht, die vom Kontrollserver (CSE) mit Hilfe eines asymmetrischen oder symmetrischen Chiffrierschlüssels verschlüsselt wird, ausgehend von einem Datensatz, der, neben anderen Daten, die Kennung (IMEISV) des Mobilgeräts (CB), die Identifikationsnummer des Abonnentenmoduls (IMSI), Daten von Ressourcen (RES) des Abonnentenmoduls (SIM) und eine vorhersagbare Variable (CPT) enthält.

17. Verfahren nach einem beliebigen der Ansprüche 1 bis 16, **gekennzeichnet dadurch, dass** das Abonnentenmodul (SIM) an den Kontrollserver (CSE) über das Mobilgerät (CB) und das Mobilnetz (NET) eine Bestätigungsnachricht (CF) überträgt, wenn das abonnierte Modul (SIM) das Kryptogramm (J) empfangen hat, die den ordnungsgemäßen Empfang und die passende Behandlung des Kryptogramms (J) durch das Abonnentenmodul (SIM) bescheinigt.

18. Verfahren nach Anspruch 1, **gekennzeichnet dadurch, dass** das Endgerät (CB) ein Decoder für Bezahlfernsehen ist oder ein Computer, mit dem das Sicherheitsmodul (SIM) verbunden ist.

19. Sicherheitsmodul (SIM) mit Ressourcen (RES), die örtlich für mindestens eine Anwendung (APP) zugänglich sind, die in einem Endgerät (CB) installiert ist, das mit einem Netz (NET) verbunden ist, wobei das Endgerät (CB) Mittel zum Ablesen und zur Übertragung von Daten umfasst, die mindestens die Kennung (IMEISV) des Endgeräts (CB) und die Kennung (IMSI) des Sicherheitsmoduls (SIM) umfassen, wobei das Sicherheitsmodul (SIM) Mittel zum Empfang und zur Analyse eines Kryptogramms (J) umfasst, das Anweisungen zum Betrieb der Anwendung (APP) nach Kriterien umfasst, die von dem Anbieter der Anwendung (APP) und/oder vom Betreiber und/oder vom Benutzer des Endgeräts (CB) vorbestimmt wurden, wobei das Sicherheitsmodul (SIM) **dadurch gekennzeichnet ist, dass** es Mittel zur selektiver Aktivierung bzw. Deaktivierung mindestens einer Ressource (RES), Daten oder Funktionen des genannten Sicherheitsmoduls (SIM) umfasst, wobei die Mittel zur selektiven Aktivierung bzw. Deaktivierung Anweisungen in dem Kryptogramm (J) benutzen, wobei die Ressourcen, Daten oder Funktionen, die für den Zugang zu dem Netz (NET) des Endgeräts (CB) notwendig sind, vor der Ankunft des Kryptogramms (J) in Betrieb gesetzt werden.

20. Sicherheitsmodul (SIM) nach Anspruch 19, **gekennzeichnet dadurch, dass** es ein Abonnentenmodul (SIM) vom Typ "SIM-Karte" darstellt, das mit einem Mobilgerät (CB) verbunden ist.

## Claims

1. Method for managing the security of applications (APP) functioning within an equipment (CB) connected to a network (NET), said network (NET) being managed by a control server (CSE) of an operator, said applications (APP) using resources (RES), data or functions, stored in a security module (SIM) locally connected to said equipment (CB), comprising the following preliminary steps:
- reception of data comprising at least the type and software version of the equipment (CB) and the identity of the security module (SIM), via the network (NET), by the control server (CSE),
- analysis and verification by the control server (CSE) of said data (ID),
- generation of a cryptogram (J) from the result of the verification of said data (ID), and transmission of said cryptogram (J), via the network (NET) and the equipment (CB), to the security module (SIM),
- reception and analysis of the cryptogram (J) by the security module (SIM), the cryptogram (J) comprising instructions conditioning the functioning of applications (APP) according to criteria established by the supplier of said application (APP) and/or the operator and/or the user of the equipment (CB),
said method is **characterized in that** the security module (SIM) activates, respectively deactivates, in a selective manner at least one resource (RES), data or functions, of said security module (SIM) by using the instructions comprised in the cryptogram (J), the resources (RES), data or function, necessary to gain access to the network (NET) of the mobile equipment (CB), being operated before the incoming of the cryptogram (J).

2. Method according to claim 1, **characterized in that** the equipment (CB) is a mobile equipment (CB) of mobile telephony.

3. Method according to claim 1, **characterized in that** the network (NET) is a mobile network of the GSM, GPRS or UMTS type.

4. Method according to any of claims 1 to 3, **characterized in that** the security module (SIM) is a subscriber module of a SIM card type inserted into the mobile equipment (CB) of mobile telephony.

5. Method according to any of claims 1 to 4, **characterized in that** the identification of the mobile equipment / subscriber module (SIM) set is carried out from the identifier (IMEISV) of the mobile equipment (CB) and from the identification number (IMSI) of the subscriber module pertaining to a subscriber of the mobile network (NET).

6. Method according to any of claims 1 to 5, **characterized in that** the criteria define the usage limits of an application (APP) according to risks associated to said application (APP) and to the type and to the software version of the mobile equipment (CB) that the operator and/or the application (APP) supplier and/or the user of the mobile equipment (CB) want to take into account.

7. Method according to any of claims 1 to 6, **characterized in that** it is carried out after each connection of the mobile equipment (CB) to the network (NET).

8. Method according to any of claims 1 to 6, **characterized in that** it is carried out after each updating of the software version of the mobile equipment (CB).

9. Method according to any of claims 1 to 6, **characterized in that** it is carried out after each activation or deactivation of an application (APP) on the mobile equipment (CB).

10. Method according to any of claims 1 to 6, **characterized in that** it is carried out after each updating of the software version of the subscriber module (SIM).

11. Method according to any of claims 1 to 6, **characterized in that** it is carried out after each updating of the resources (RES) on the subscriber module (SIM).

12. Method according to any of claims 1 to 6, **characterized in that** it is carried out periodically at a rate given by the control server (CSE).

13. Method according to any of claims 1 to 6, **characterized in that** it is carried out after each initialization of an application (APP) on the mobile equipment (CB).

14. Method according to any of preceding claims **characterized in that** the subscriber module (SIM), prior to the execution of the instructions given by the cryptogram (J), compares the identifier (IMEISV) of the mobile equipment (CB) with that previously received and initiates the verification operation only if the identifier (IMEISV) has changed.

15. Method according to any of claims 1 to 5, **characterized in that** the control server (CSE), prior to the transmission of the cryptogram (J), compares the identifier (IMEISV) of the mobile equipment (CB) with that previously received and initiates the verification operation only if the identifier (IMEISV) has changed.

16. Method according to any of claims 1 to 15, **characterized in that** the cryptogram (J) is made up of a message encrypted by the control server (CSE) by means of an asymmetric or symmetric encryption key from a set of data containing, among other data, the identifier (IMEISV) of the mobile equipment (CB), the identification number (IMSI) of the subscriber module (SIM), the resources (RES) references of the subscriber module (SIM) and a predictable variable (CPT).

17. Method according to any of claims 1 to 16, **characterized in that** the subscriber module (SIM) transmits to the control server (CSE), via the mobile equipment (CB) and the mobile network (NET), a confirmation message (CF) when the subscriber module (SIM) has received the cryptogram (J), said message confirming the correct reception and the adequate processing of the cryptogram (J) by the subscriber module (SIM).

18. Method according to claim 1, **characterized in that** the equipment (CB) is a Pay-TV decoder or a computer to which the security module (SIM) is connected.

19. Security module (SIM) comprising resources (RES) intended to be locally accessed by at least one application (APP) installed in an equipment (CB) connected to a network (NET), said equipment (CB) comprising reading and transmission means of data comprising at least the identifier (IMEISV) of the equipment (CB) and the identifier (IMSI) of the security module (SIM), said security module (SIM) comprising means for receiving and analyzing a cryptogram (J) comprising instructions conditioning the functioning of the application (APP) according to criteria pre-established by the supplier of said application (APP) and/or by the operator and/or by the user of the equipment (CB), the security module (SIM) being **characterized in that** it includes selective activation, respectively deactivation, means of at least one resource (RES), data or function of said security module (SIM), said selective activation, respectively deactivation, means using the instructions comprised in the cryptogram (J), the resources (RES), data or functions, necessary to gain access to the network (NET) of the mobile equipment (CB), being operated before the incoming of the cryptogram (J).

20. Security module (SIM) according to claim 19, **characterized in that** it constitutes a subscriber module (SIM) of "SIM card" type, connected to a mobile equipment (CB).
